# EUROPÄISCHE PATENTSCHRIFT

(11) **EP 2 467 319 B1**
(45) Veröffentlichungstag und Bekanntmachung des Hinweises auf die Patenterteilung: **04.12.2013**
(21) Anmeldenummer: 10744584.3
(22) Anmeldetag: 17.08.2010
(51) Int. Cl.: B65G 1/137, B65G 59/06, B65D 19/02, B65G 59/02

(54) **LAGER- UND KOMMISSIONIERSYSTEM MIT EINEM UNIVERSELL EINSETZBAREN WINKELLADUNGSTRÄGER**
STORAGE AND COMMISSIONING SYSTEM COMPRISING A UNIVERSALLY USABLE LOAD CARRIER
SYSTÈME DE STOCKAGE ET DE PRÉPARATION DE COMMANDES ÉQUIPÉ D'UN SUPPORT DE CHARGE UNIVERSEL

(30) Priorität: 17.08.2009 DE 102009038124
(43) Veröffentlichungstag der Anmeldung: 27.06.2012
(73) Patentinhaber: SSI Schäfer Peem GmbH, 8051 Graz (AT)
(72) Erfinder: WINKLER, Max, A-8010 Graz (AT)
(74) Vertreter: Witte, Weller & Partner
(86) Internationale Anmeldenummer: PCT/EP2010/061985
(87) Internationale Veröffentlichungsnummer: WO 2011/020835

(56) Entgegenhaltungen:
- EP-A2- 0 960 836
- WO-A1-2008/089980
- BE-A- 646 027
- DE-A1- 10 009 560
- DE-A1- 19 511 364
- DE-C- 358 947
- DE-U1- 8 313 868
- FR-A1- 2 302 945
- FR-A1- 2 838 114
- US-A- 4 480 748
- US-A- 5 476 191

## Beschreibung

Die vorliegende Erfindung betrifft ein Lager- und Kommissioniersystem mit einem Lagerbereich und einem Kommissionierbereich, wobei ein universeller Winkelladungsträger sowohl zum Lagern als auch beim eigentlichen Kommissionieren eingesetzt wird.

Aus den deutschen Patentanmeldungen DE 10 2006 025 620 A1 sowie DE 10 2006 025 618 A1 ist ein Lager- und Kommissioniersystem bekannt, welches mit Hilfe von Tablaren als (einzigen) Ladungsträgern betrieben wird. Wareneingangsseitig kann ein Paletten-Hochregallager vorgesehen sein, in welchem vollständig beladene Vorratspaletten vorgehalten werden, die je nach Bedarf lagenweise depalettiert werden. Jedes Tablar nimmt dabei eine vollständige Palettenlage, bestehend aus einer Vielzahl von einzelnen Artikeln, auf und wird anschließend in einem Tablarlager gelagert. Die so beladenen Tablare werden zum Zwecke einer Kommissionierung zu einer Vereinzelungsstation befördert, wo einzelne Artikel einer Palettenlage vom Tablar genommen werden können. Die Entnahme erfolgt entweder manuell oder automatisiert. Anschließend wird das Tablar in das Tablarlager zurückgebracht. Wurde ein Tablar vollständig geleert, so wird es wieder zur Depalettierstation beim Hochregallager befördert.

Das in den oben genannten deutschen Patentanmeldungen offenbarte System ist besonders für den Retail-Bereich geeignet, wie z.B. für den Lebensmittelhandel zur Versorgung von Filialen aus einem Zentrallager.

Kleinere Artikel werden üblicherweise in sogenannten automatisierten Kleinteilelagern (AKL) bevorratet. Ein AKL umfasst oft einen Lagerbereich mit Regalen, die zur Aufnahme von Tablaren oder Behältern ausgelegt sind. In Regalgassen zwischen den Regalen bewegen sich Regalbediengeräte, mit denen die Tablare oder Behälter automatisiert ein- und ausgelagert und an eine Fördertechnik übergeben werden können. Die Fördertechnik transportiert die Tablare bzw. Behälter an manuell betriebene Kommissionierplätze, wo die zu kommissionierenden Waren händisch aus den Lagertablaren bzw. -behältern entnommen und in Auftragsbehälter abgegeben werden. Alternativ kann der Kommissioniervorgang auch voll automatisch mit Hilfe von sogenannten Pick-Robotern durchgeführt werden, wie sie exemplarisch in der DE 10 2008 046 325 beschrieben sind, auf die hier durch Bezugnahme voll umfänglich verwiesen wird. Beim Kommissionieren mit Robotern müssen die Waren jedoch entweder auf einen Bandförderer geleert werden oder dem Roboter in speziell ausgebildeten Tablaren präsentiert werden, damit der Roboter die Waren auch tatsächlich vertikal von oben greifen kann. Wenn die Waren auf ein Transportband geleert werden, liegen sie chaotisch auf dem Band verteilt, so dass vor dem Roboter ein Vision-System vorgesehen werden muss, um den Ort und die Orientierung der chaotisch verteilten Waren für den nachfolgend angeordneten Roboter vorab (rechnerisch) zu bestimmen. Werden die Waren in speziellen Tablaren zum Roboter gebracht, können nur ganz spezielle Warentypen gehandhabt werden, wie z.B. Medikamente. Besonders flache Waren, wie z.B. CDs oder Bücher, sind für die Bereitstellung in Tablaren nicht besonders geeignet, da nur sehr wenige CDs (einfachhoch) auf einem Tablar Platz finden.

Des Weiteren sind im Stand der Technik Kommissionierautomaten bekannt, die oft auch als "A-Frames" bezeichnet werden, da ihr Grundgestell einen A-förmigen Querschnitt aufweist. Ein derartiger Kommissionierautomat ist exemplarisch in der US 5,271,703 offenbart.

Die deutsche Patentanmeldung DE 28 45 691 offenbart einen dreiseitigen Container für verpackte Waren. Dabei werden zwei verschieden lange Seiten einer rechtwinkligen Grundplatte von zwei gleich hohen Seitenwänden umschlossen, die zueinander im rechten Winkel angeordnet sind, wobei zwei Seiten der Grundplatte zum Be- und Entladen offen sind.

Die deutsche Patentanmeldung DE 102 52 709 A1 offenbart eine Vorrichtung zum Stapeln von Palettenaufsetzrahmen. Die Vorrichtung weist ein Bodenteil und zwei angrenzende Seitenplatten auf, die vorzugsweise aus Blech gebildet sind. Diese Elemente stehen vorzugsweise in einem Winkel von 90° zueinander. Um Fixierbänder an Waren anbringen zu können, die in der Vorrichtung gestapelt werden sollen, weist die Vorrichtung in wenigstens einer Seitenwand wenigstens eine Aussparung auf, die vom Bodenteil parallel zu einer Verbindungskante der Seitenwände nach oben verläuft.

Winkelladungsträger sowie Kommissioniersysteme werden in den Dokumenten DE 195 11 364 A1, EP 0 960 836 A2, US 5,476,191 A, DE 83 13 868 U1 und US 4,480,748 A offenbart.

DE 100 09 560 A1 offenbart ein Lager- und Kommissioniersystem mit einem Lagerbereich und einem Kommissionierbereich, wobei sowohl zur Lagerung als auch zum Transport von zu kommissionierenden Waren zwischen dem Lagerbereich und dem Kommissionierbereich Winkelladungsträger eingesetzt werden, wobei der Winkelladungsträger drei Seiten aufweist, die im Wesentlichen rechtwinklig zueinander orientiert sind und eine erste Stützwand, eine zweite Stützwand und einen Boden zum stapelartigen Bevorraten der Waren definieren. Dieser Winkelladungsträger kann nicht an Produkte von unterschiedlichen Ausmaßen angepasst werden.

Ausgehend von diesem Stand der Technik stellt sich die Aufgabe, ein Lager- und Kommissioniersystem bereitzustellen, mit dem sowohl flache Waren, wie z.B. CDs, eingeschweißte Shirts oder Bücher, als auch andere handelsübliche Waren, wie z.B. Medikamente, Schuhkartons, Ersatzteile wie etwa Scheinwerfergehäuse, etc. , gleichermaßen effizient kommissioniert werden können, wobei das System vorzugsweise dazu ausgelegt sein soell, unterschiedliche Kommissionierarten, wie z.B. manuelles Kommissionieren oder automatisiertes Kommissionieren, wie z.B. mit einem A-Frame oder einem Greifroboter, umsetzen zu können. Insbesondere soll ein Winkelladungsträger bereitgestellt werden, der in einem derartigen Lager- und Kommissioniersystem eingesetzt werden kann.

Es wird ein Winkelladungsträger mit drei Seiten offenbart, die im Wesentlichen rechtwinklig zueinander orientiert sind und die eine erste Stützwand, eine zweite Stützwand und einen Boden zum stapelartigen Bevorraten der Waren definieren, wobei bei zumindest einigen der Winkelladungsträger zumindest eine der drei Seiten mindestens eine Aussparung aufweist, die zur lösbaren Aufnahme eines Fixierstegs oder zum Durchgriff einer Vereinzelungseinrichtung einer automatisierten Kommissioniereinheit angepasst ist, oder wobei die Fixierstege mittels magnetischen Halteelementen an den Stützwänden variabel befestigbar sind.

Diese Aufgabe wird mit einem Lager- und Kommissioniersystem gelöst, wobei das Lager- und Kommissioniersystem einen Lagerbereich und einen Kommissionierbereich aufweist, wobei sowohl zur Lagerung als auch zum Transport von zu kommissionierenden Waren zwischen dem Lagerbereich und dem Kommissionierbereich Winkelladungsträger einsetzbar sind, wobei ein Winkelladungsträger Fixierstege und drei Seiten aufweist, wobei die Seiten im Wesentlichen rechtwinklig zueinander orientiert sind und eine erste Stützwand, eine zweite Stützwand und einen Boden zum stapelartigen Bevorraten der Waren definieren, wobei die Stützwände jeweils eine Vielzahl von Aussparungen aufweisen, wobei die Vielzahl von Aussparungen in einem derartigen Rastermaß angeordnet sind, dass die Fixierstege eng an die Waren gesetzt werden können, und wobei jede der Aussparungen zur Lösbaren Aufnahme eines der Fixierstege angepasst ist, wobei die Seitenwände säulenartig aus dem Boden herausragen und die Fixierstege parallel zu den Seitenwänden anbringbar sind, so dass auf dem Winkelladungsträger sortenrein gespeicherte Waren eine wiederkehrende, fest definierte Position relativ zum Boden einnehmen.

Die im Stand der Technik zur Lagerung der Waren üblichen Lagerbehälter und Tablare werden bei der vorliegenden Erfindung durch einen länglichen, dreiseitigen Winkel ersetzt, in welchem die Waren säulenartig gestapelt werden. Der Winkel(ladungsträger) dient als Kommissionier- und Lagerelement. Mit dem Winkelladungsträger können Kommissionierautomaten, wie z.B. A-Frames, bestückt werden. Alternativ können Auswerfer, wie sie bei A-Frames bekannt sind, isoliert (d.h. ohne A-Frame) eingesetzt werden, um Waren aus dem Winkelladungsträger durch Auswerfen zu vereinzeln. Alternativ können die Waren auch mit Hilfe eines Hubstempels einfach oder mehrfach vertikal angehoben werden, um anschließend am oberen Ende des Winkelladungsträgers mit Hilfe eines Schiebers durch horizontales Abschieben vereinzelt zu werden. Als weitere Alternative kann der Winkelladungsträger zum Kommissionieren mit einem Roboter eingesetzt werden, indem der Roboter beispielsweise vertikal von oben, vorzugsweise mittels einer Saugeinrichtung, die zu kommissionierenden Waren ergreift.

Der Winkelladungsträger ist somit universell einsetzbar, was die verschiedenen bekannten Kommissioniervarianten betrifft. Der Winkelladungsträger ist universell einsetzbar, was Lagervorgänge und Kommissioniervorgänge betrifft. Der Winkel selbst ist vorzugsweise baukastenartig aufgebaut, indem geschlitzte Seitenwände, klappbare Seitenwände, klappbare Fixierstege, einrastbare Fixierstege oder Ähnliches (z.B. magnetisch fixierbare Stege) eingesetzt werden.

Der Winkelladungsträger weist Fixierstege auf, wobei die Stützwände jeweils eine Vielzahl von Aussparungen aufweist, wobei die Vielzahl von Aussparungen in einem derartigen Rastermaß angeordnet sind, dass die Fixierstege eng an die Waren gesetzt werden können, und wobei jede der Aussparungen zur Lösbaren Aufnahme eines der Fixierstege angepasst ist.

Insbesondere sind die Aussparungen als Schlitze ausgebildet, in die die Fixierstege eingehängt werden können.

Auch ist es von Vorteil, wenn die Aussparungen zusätzlich im Boden vorgesehen sind.

Bei einer weiteren vorteilhaften Ausgestaltung weisen der Boden und eine der Stützwände eine Ausnehmung auf, die derart ausgebildet ist, dass ein umlaufender Mitnehmer eines Auswerfers einer Vereinzelungsvorrichtung die Ausnehmung wiederkehrend durchlaufen kann, um im Winkelladungsträger stapelförmig bevorratete Waren schrittweise auszuschieben, so dass nicht ausgeschobene Waren schrittweise mittels Schwerkraft nachrutschen und so zur weiteren Ausgabe zur Verfügung stehen.

Bei einer noch weiteren bevorzugten Ausführungsform weist das System eine Vereinzelungseinrichtung und der Bodenein Loch auf, das angepasst ist, die Vereinzelungseinrichtung, vorzugsweise einen Hubstempel, passieren zu lassen, um bevorratete Waren im Winkelladungsträger anzuheben.

Wie bereits oben erwähnt, kann die Vereinzelungseinrichtung eine Auswerfereinheit sein. Die Auswerfereinheit kann isoliert bereitgestellt werden oder Teil eines Kommissionierautomaten, wie z.B. eines A-Frames, sein.

Die Vereinzelungseinrichtung kann aber auch ein Hubstempel, insbesondere in Kombination mit einem am oberen Ende des Winkelladungsträgers angeordneten Schiebers, sein.

Gemäß einer bevorzugten Ausführungsform sind die Winkelladungsträger zum Einhängen in einen Hängeförderer, zum Transportieren auf einem Horizontalförderer, zum Lagern in einem Fachbodenregal und/oder zum Stapeln mit anderen Winkelladungsträgern angepasst.

Dies macht es möglich, dass die Winkelladungsträger unabhängig vom Typ der verwendeten Förderer eingesetzt werden können. Existierende Systeme können nachgerüstet und/oder erweitert werden.

Wenn die Winkelladungsträger zum Einhängen in einen Hängeförderer ausgelegt sind, lassen sich z.B. isolierte Auswerfereinheiten einfach derart anfahren, dass die Auswerfereinheiten direkt unterhalb der Winkelladungsträger angeordnet sind. Mittels geeigneter Arretier- und Positioniermittel, auf die unten noch detaillierter eingegangen werden wird, können dann Mitnehmer der Auswerfereinheiten in Schlitze im Boden des Winkelladungsträgers eingreifen und so bevorratete Waren von unten horizontal abschieben. Die Winkelladungsträger können aber auch, z.B. manuell, ausgehängt werden und dann in Kommissionierautomaten (A-Frames) als Vorratsschächte eingehängt werden. In einer weiteren Ausführungsform können anstatt isolierten Auswerfereinrichtungen, z.B. Hubstempel unterhalb der Winkelladungsträger positioniert werden, um vertikal durch Löcher in den Böden der Winkelladungsträger zu greifen. In unmittelbarer Nähe des oberen Rands des Winkelladungsträgers können dann horizontal bewegliche Schieber vorgesehen sein, die so viele Waren seitlich abschieben, wie der Hubstempel angehoben hat.

Eine Standfläche des Winkelladungsträgers selbst ist vorzugsweise so ausgebildet, dass der Winkelladungsträger auch auf einen Horizontalförderer, wie z.B. eine Rollenbahn oder einen Gurtförderer, gestellt werden kann, ohne während eines Transports umzufallen. Die Winkelladungsträger können dann auch einfach in Fachbödenregalen gelagert werden. Vorzugsweise sind die Standflächen der Winkelladungsträger auch so ausgebildet, dass man mehrere Winkelladungsträger übereinander verrastend stapelbar sind. So wird ein zur Verfügung stehender Lagerraum optimal genutzt.

Weiter ist es von Vorteil, wenn der Lagerbereich und der Kommissionierbereich über mindestens einen Förderer, insbesondere einen Hängeförderer, eine Rollenbahn und/oder einen Gurtförderer, materialflusstechnisch miteinander verbunden sind.

Die Winkelladungsträger können dann z.B. mit bereits existierenden Förderern aus dem Lager zu den Kommissionierplätzen oder -automaten des Kommissionierbereichs befördert werden.

Ein weiterer Vorteil ist darin zu sehen, dass der Lagerbereich Regale, insbesondere Fachbödenregale oder Hängeregale, die zur Speicherung von Winkelladungsträgern angepasst sind, oder mindestens einen umlaufenden Förderer, insbesondere einen Hängeförderer, aufweist.

Auch hier kommt wieder der Gedanke zum Ausdruck, dass bereits existierende Läger mit dem erfindungsgemäßen System kompatibel sind, d.h. insbesondere um das erfindungsgemäße System erweitert werden können.

Die Stützwände des Winkelladungsträgers ragen senkrecht aus dem Boden heraus und die Fixierstege sind parallel zu den Stützwänden anbringbar, so dass auf dem Winkelladungsträger sortenrein gespeicherte Waren, wobei sich Sorten hinsichtlich ihrer Geometrie unterscheiden können, eine wiederkehrende, fest definierte Position (vorzugsweise die durch die Stützwände definierte Ecke) relativ zum Boden einnehmen.

Diese Ausgestaltung der Winkelladungsträger ermöglicht eine genaue Positionierung der zu bevorratenden Waren auf dem Winkelladungsträger, so dass z.B. Roboter zum Kommissionieren eingesetzt werden können. Beim Kommissionieren mit Robotern ist es erforderlich, dass die zu greifenden Waren an fest vorgegebenen Positionen relativ zum Winkelladungsträger bereitgestellt werden. Dazu dienen die zusätzlichen Fixierstege, mit denen die Position der Waren mit einem ausreichenden Toleranzbereich fest vorgegeben werden kann.

Des Weiteren lassen sich die Winkelladungsträger so auch in bekannte Kommissionierautomaten (z.B. A-Frames, M-Pematen, S-Pematen, usw.) im Sinne von Vorratsmagazinen einsetzen.

Auch ist es von Vorteil, wenn die mindestens eine Aussparung derart ausgebildet ist, dass ein Fixiersteg variabel an mehreren Positionen relativ zum Boden befestigt werden kann. Waren können so positionsgenau, wenn möglich an einer vorgegebenen Speicherposition relativ zum Boden, bevorratet werden.

Bekanntlich sind nicht alle zu kommissionierenden Waren gleich dimensioniert. Um nicht eine feste Zuordnung zwischen einem Winkelladungsträger und einem zu bevorratenden Warentyp vornehmen zu müssen, ist es wünschenswert, dass die Winkelladungsträger universell eingesetzt werden können. Dies wird durch hinsichtlich ihrer relativen Lage flexibel anbringbare Fixierstege erreicht. In den Seiten der Winkelladungsträger können dazu, z.B. mit einem fest vorgegebenen Rastermaß, zahlreiche Aussparungen in Form von Nuten, Vertiefungen, etc. vorgesehen sein.

Exemplarisch kann eine derartige Aussparung ein Schlitz sein, der sich vorzugsweise über dem Boden und mindestens einer der Seitenwände erstreckt.

Bei einer derartigen Ausführung der Aussparung können sowohl Fixierstege als auch Vereinzelungseinrichtungen mit dem Winkelladungsträger zusammenwirken, was wiederum ein Ausdruck der Universalität des Winkelladungsträgers ist.

Bei einer weiteren vorteilhaften Ausgestaltung sind die Winkelladungsträger selbst unterschiedlich dimensioniert.

Damit ist es möglich, dass sich die Winkelladungsträger an verschiedene Formen von zu bevorratenden Waren anpassen können.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Blockdiagramm eines Lager- und Kommissioniersystem gemäß der vorliegenden Erfindung;
- Fig. 2: eine perspektivische Ansicht auf eine einfachste Ausführungsform eines Winkelladungsträgers;
- Fig. 3a: perspektivisch einen weiteren Winkelladungsträger, der mit Fixierstegen zusammenwirkt, um Waren ortsgenau positionieren zu können;
- Fig. 3b: eine Draufsicht auf den Winkelladungsträger der Fig. 3a;
- Fig. 4: eine perspektivische Ansicht des Winkelladungsträgers der Fig. 3, wobei die Fixierstege weggelassen sind;
- Fig. 5: eine perspektivische Ansicht eines weiteren Winkelladungsträgers, der dazu geeignet ist, mit einem Hubstempel zusammenzuwirken;
- Fig. 6: eine perspektivische Ansicht eines Winkelladungsträgers, der dazu geeignet ist, mit einem Auswerfer zusammenzuwirken;
- Fig. 7: eine schematisierte Draufsicht auf eine erste konkrete Ausführungsform des erfindungsgemäßen Lager- und Kommissioniersystems;
- Fig. 8: einen Ausschnitt einer Anwendung, bei der die Winkelladungsträger zum Transport mit einem Hängeförderer geeignet sind;
- Fig. 9: einen Winkelladungsträger, der mit Hilfe eines Greifroboters zu Kommissionierzwecken automatisiert entladen wird;
- Fig. 10: ein zweites konkretes Beispiel für ein erfindungsgemäßes Lager- und Kommissioniersystem.

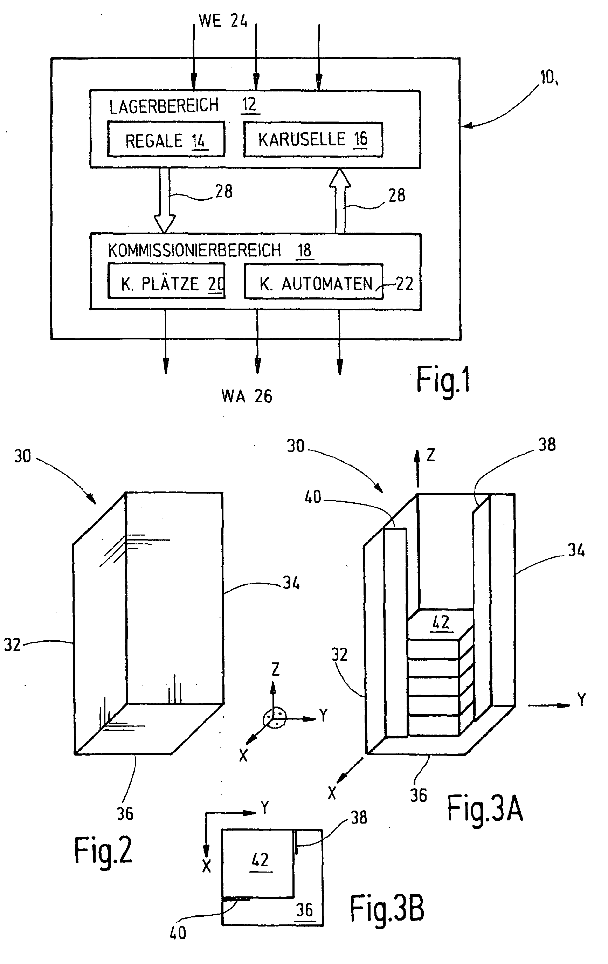

In dem Blockdiagramm der Fig. 1 ist das erfindungsgemäße Lager- und Kommissioniersystem mit 10 bezeichnet.

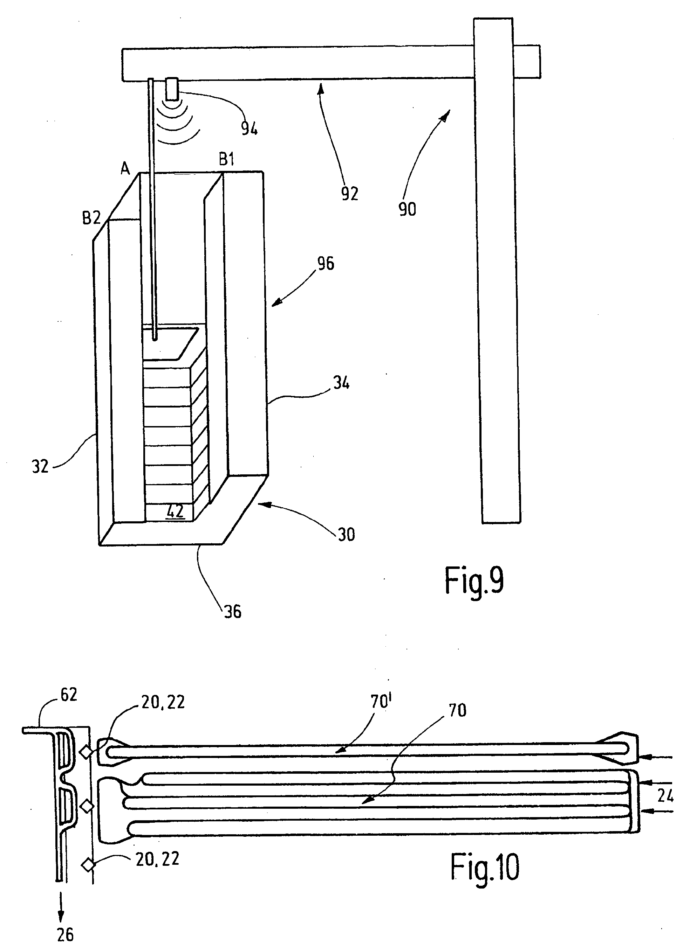

Das Lager- und Kommissioniersystem 10 weist einen Lagebereich 12 auf, der wiederum Regale 14, Karusselle 16 und ähnliche Lagereinrichtungen aufweisen kann. Der Kommissionierbereich 18 umfasst einen oder mehrere Kommissionierplätze 20. Alternativ oder ergänzend können Kommissionierautomaten 22, wie z.B. A-Frames oder Pick-Roboter (vgl. Fig. 9) eingesetzt werden. Die Kommissionierplätze 20 können manuell oder automatisiert betrieben werden. An den Kommissionierplätzen 20 können beispielsweise separate Auswerfereinheiten eingesetzt werden, wie sie aus dem technischen Gebiet der A-Frames bekannt sind. Außerdem können dort Vereinzelungseinrichtungen eingesetzt werden, die z.B. einen Hubstempel mit im oberen Bereich von Winkelladungsträgern vorgesehenen, horizontal wirkenden Schiebern aufweisen.

Der Lagerbereich 12 wird über einen Wareneingang 24 mit Waren versorgt, die zu kommissionieren sind. Der Wareneingang 24 ist entweder an den Lagerbereich 12 gekoppelt oder Teil des Lagerbereichs 12 selbst, wie es nachfolgend noch detaillierter beschrieben werden wird.

Kommissionierte Waren verlassen das Lager- und Kommissioniersystem 10 über einen Warenausgang 26, der entweder an den Kommissionierbereich 18 gekoppelt oder Teil des Kommissionierbereichs 18 selbst ist.

Die zu kommissionierenden Waren können mittels hier nicht näher gezeigten Fördereinrichtungen 28 zwischen dem Lagerbereich 12 und dem Kommissionierbereich 18 transferiert werden. Bei den Fördereinrichtungen 28 kann es sich um mehrere kombinierte Einzelförderstrecken und/oder einen endlos umlaufenden Verteilförderer handeln, der über entsprechende Anschlusselemente mit dem Lagerbereich 12 und dem Kommissionierbereich 18 verbunden ist. Als Förderereinrichtungen 28 können alle herkömmlichen Fördertypen eingesetzt werden, wie z.B. Rollenbahnen, Gurtförderer, Hängeförderer, Kettenförderer, etc.

Die vorliegende Erfindung baut auf dem Gedanken auf, anstatt herkömmlicher Ladungsträger, wie z.B. Behälter oder Tablare, Winkelladungsträger 30 einzusetzen, wie sie nachfolgend im Zusammenhang mit den Figuren 2 bis 6 näher beschrieben werden. Die Winkelladungsträger 30 haben den Vorteil, dass die Waren im Wareneingang 24 automationstauglich abgelegt und danach weder hinsichtlich ihrer Lage verändert noch händisch angefasst werden. Damit wird die erste Regel der Robotik befolgt ("Gebe einen einmal erreichten Zustand der Ordnung nicht mehr auf!").

Der konventionelle Lagerbehälter wird hier durch einen länglichen Winkel mit drei Seiten abgelöst. In diesem Winkel werden die Waren in Form einer vertikalen Säule gestapelt.

Eine einfachste Form eines Winkelladungsträgers 30 ist in der Fig. 2 gezeigt. Der Winkel 30 kann unterschiedlich breit, lang und hoch sein. Der in der Fig. 2 gezeigte Ladungsträger 30 kann z.B. 25 x 25 x 100 cm³ messen. Der Winkelladungsträger weist generell (genau) drei (Basis-)Seiten 32, 34 und 36 auf. Die drei Seiten umfassen eine erste (vertikale) Stützwand 32, eine zweite (vertikale) Stützwand 34 und einen (horizontalen) Boden 36 auf. Die Seiten 32-36 stehen vorzugsweise senkrecht aufeinander, wie es exemplarisch mittels eines kartesischen Koordinatensystems angedeutet sein soll. Es versteht sich, dass die Stützwände 32 und 34 senkrecht zueinander orientiert sind, wobei deren Orientierung relativ zum Boden 36 variiert werden kann, je nach Anwendung. In diesem Zusammenhang denke man an die leicht angeschrägten Vorratsschächte eine A-Frames.

Der in der Fig. 2 gezeigte einfache Winkelladungsträger 30 ist z.B. für eine Entnahme von oben, z.B. mittels eines Greifroboters, geeignet.

In Fig. 3a ist eine zweite Ausführungsform eines Winkelladungsträgers 30 gezeigt, die sich nur unwesentlich von der Fig. 2 unterscheidet. Der Winkelladungsträger 30 der Fig. 3a weist zusätzlich flächenartig ausgebildete Fixierstege 38 und 40 auf, mit denen solche Seiten von Waren 42, die in dem Winkelladungsträger 30 den Stützwänden 32 und 34 gegenüber liegen, gegen ein unabsichtliches Abrutschen gesichert werden können. Die Fixierstege 38, 40 sind vorzugsweise genauso hoch (vergleiche Z-Richtung) wie die Stützwände 32 und 34. Da die zu kommissionierenden Waren 42 üblicherweise eine regelmäßige Geometrie aufweisen, werden die Fixierstege 38 und 40 parallel zu den Stützwänden 32 und 34 orientiert. Die Fixierstege 38 und 40 sind jedoch bedeutend schmaler als die Stützwände 32 und 34, so dass ausreichend Raum zwischen den Fixierstegen 38 und 40 bleibt, um den Winkelladungsträger 30, insbesondere manuell, mit Waren 42 zu bestücken. Üblicherweise werden die Fixierstege 38, 40 erst nach einem Befüllen mit Waren 42 angebracht. Die Fixierstege 38, 40 werden bspw. durch ein enges Rastsystem wie bei einem Kabelbinder am Schluss gegen den Warenstapel gedrückt, verbleiben durch die Rastierung in dieser Position und schützen den Stapel gegen ein Abrutschen.

Alternativ zu mechanisch in Aussparungen in den Stützwänden einrastenden Fixierstegen, die dazu Nasen oder Ähnliches aufweisen, könnten die Fixierstege z.B. auch mittels magnetischen oder ähnlichen Halteelementen (nicht dargestellt) flexibel an den Stützwänden fixiert werden. In diesem Fall ist man von dem Rastermaß unabhängig und kann die Fixierstege ganz eng an die Waren setzen, so dass die Waren eine absolut fixierte Position relativ zum Warenladungsträger aufweisen. In diesem Fall müssen die Stützwände keine Aussparungen aufweisen. Die Stützwände sind vorzugsweise aus Metall hergestellt, so dass die Halteelmente (z.B. Permanentmagneten am Rücken der Fixierstege) direkt mit den Stützwänden (magnetisch) wechselwir-ken können. Die Stützwänden können auch aus einem nicht magnetisierbaren Material bestehen. In diesem Fall wären den Halteelementen der Fixierstege gegenüberliegend z.B. weitere Magnethalter vorgesehen, die an der Rückseite der jeweiligen Stützwand positioniert werden.

In der Draufsicht der Fig. 3b ist gut zu erkennen, dass die Fixierstege 38 und 40 möglichst eng an den Waren 42 positioniert werden, damit sich die Waren 42 relativ zum Boden 36 nicht bzw. kaum bewegen können. Die durch die beiden Stützwände 32 und 34 definierte Ecke wird vorzugsweise benutzt, um die Waren 42 relativ zum Winkelladungsträger 30 zu orientieren und positionieren. Diese Ecke legt eine bevorzugte Lagerposition für die Waren 32 fest. Dies ist insbesondere dann wichtig, wenn zum Entnehmen der Waren 42 z.B. ein Roboter eingesetzt werden. Es versteht sich, dass dies natürlich generell für eine automatische Entnahme gilt, unabhängig davon, ob ein Roboter oder eine andere Technologie eingesetzt wird. Entscheidend ist, dass durch die Geometrie des Winkelladungsträgers 30 und die Position der Fixierstege 38, 40 eine Lage der Waren 42 auch ohne eine aufwendige Bildverarbeitung bekannt ist, was eine Vorbedingung für ein automatisches Kommissionieren darstellt. Der Einsatz von Robotern erfordert eine äußerst genaue Positionierung bzw. Kenntnis des Orts der Waren 42 im Moment der automatischen Entnahme durch den Roboter. Üblicherweise greift der in den Fig. 3a und 3b nicht gezeigte Roboter dabei die Waren 42 von oben, z.B. mittels eines Vakuumsaugkopfes. Eine X-Y-Lage der Ware 42 ist (relativ zum Winkelladungsträger 30) somit immer sichergestellt. Alternativ können die durch die Stützwände 32, 34 und die Fixierstege 38 und 40 definierten Ecken mit zusätzlichen Markern A, B1 und/oder B2 versehen werden, wie es exemplarisch in der Fig. 9 gezeigt ist, wo der Ladungsträger 30 der Fig. 3a mittels eines Roboters 90 entladen wird, der an seinem Arm 92 dann zusätzlich über einen Sensor 94 zum Erkennen der Marker A, B1 und/bzw. B2 verfügen kann.

Eine übergeordnete Steuereinrichtung, wie z.B. ein Lagerverwaltungsrechner, der in der Fig. 9 nicht gezeigt ist, kann z.B. aufgrund von Inventurdaten vorab bestimmen, bis zu welcher Höhe der Winkelladungsträger 30 mit Waren 42 beladen ist. Diese aus den Dimensionen der Waren 42 errechnete Füllhöhe 96 kann zusätzlich mit Hilfe des Sensors 94 verifiziert werden. Beim Sensor 94 kann es sich beispielsweise um einen preiswerten Ultraschallsensor oder Ähnliches handeln. Beim Entnehmen von Waren 42 wird jeweils die Stapelhöhe um eine Warenhöhe dekrementiert. Beide Verfahren (Ultraschall oder Zählen) sind ausreichend genau, um den Roboter 94 schnell in der Z-Richtung in die Greifposition zu bewegen. Es versteht sich, dass das hier diskutierte Greifen mit einem Roboter 90 nur eine von vielen möglichen Kommissioniervarianten darstellt.

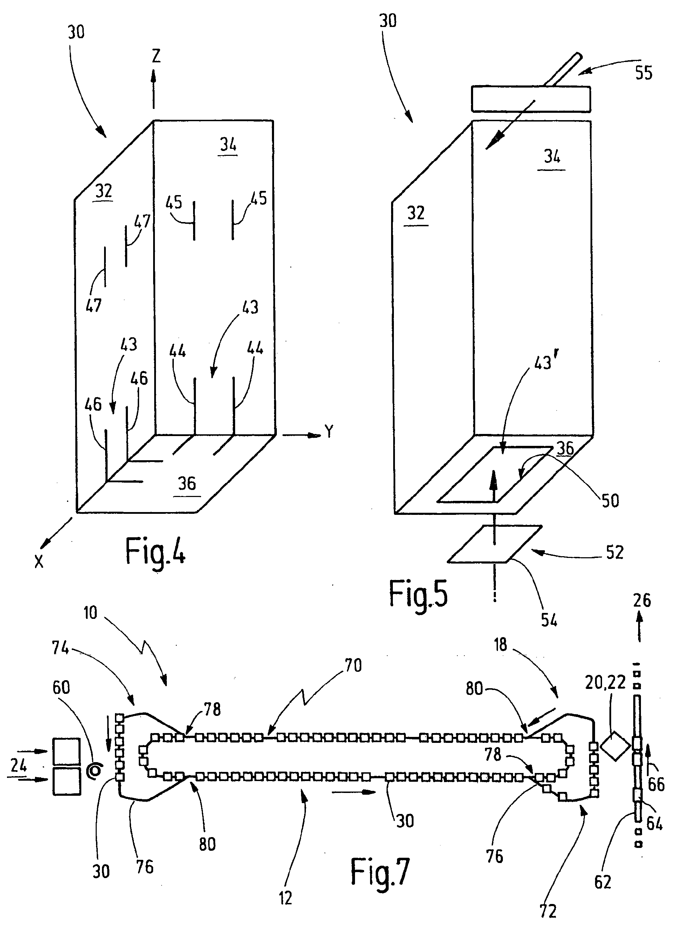

In Fig. 4 ist der Winkelladungsträger 30 der Fig. 3a und 3b ohne Fixierstege 38 und 40 und ohne Waren 42 gezeigt. Die Seiten 32, 34 und 36 des Winkelladungsträgers 30 weisen hier mehrere exemplarische, schlitzartige Aussparungen 43 auf. In der zweiten Stützwand 34 und dem Boden 36 ist ein erstes Schlitzpaar 44, bestehend hier aus zwei Schlitzen, vorgesehen. In der zweiten Stützwand 34 ist ferner ein zweites Schlitzpaar 45 vorgesehen, wobei die Schlitze 45 in der Z-Richtung so versetzt angeordnet sind, dass sie in der Y-Richtung mit den Schlitzen 44 korrespondieren. Gleiches gilt für ein drittes und viertes Schlitzpaar 46 bzw. 47 in der ersten Stützwand 32 bzw. dem Boden 36. Die Schlitze 44 bis 47 sind vorzugsweise in einem vorgegebenen Rastermaß angeordnet. Es versteht sich, dass mehr als zwei Schlitze in der X-Richtung und/oder der Y-Richtung vorgesehen werden können.

Die in der Fig. 4 nicht gezeigten Fixierstege 38 und 40 können identisch ausgebildet sein, um die Unterschiedlichkeit der eingesetzten Elemente möglichst gering zu halten. Die Fixierstege 38 und 40 verfügen im Zusammenhang mit dem Winkelladungsträger 30 der Fig. 3 und 4 beispielsweise über nasenförmige Vorsprünge (nicht dargestellt), die in die Schlitze 44-47 eingehängt werden können. Elastische Rastnasen und Ähnliches können ebenfalls eingesetzt werden.

Es versteht sich, dass je kleiner das Rastermaß ist, desto besser können die Fixierstege 38 und 40 eng an die Waren 42 gesetzt werden, wie es exemplarisch in der Fig. 3b gezeigt ist. Ferner versteht es sich, dass die Schlitze 44-47 an beliebigen Stellen und auf beliebig vielen Seiten 32, 34 bzw. 36 vorgesehen werden können. Es ist z.B. nicht zwingend erforderlich, dass der Boden 36 ebenfalls geschlitzt ausgebildet ist. Außerdem kann es reichen, wenn jeder Fixiersteg über nur eine einzige Fixiermöglichkeit verfügt, um mit einer der Seiten 32 und/oder 36 bzw. 34 und/oder 36 zu wechselwirken.

Bezug nehmend auf Fig. 5 ist eine weitere Ausführungsform eines Winkelladungsträgers 30 gezeigt. Der Winkelladungsträger 30 der Fig. 5 ist ähnlich zum Winkelladungsträger 30 der Fig. 1 ausgebildet, wobei der Boden 36 eine weitere Aussparung 43' in Form eines Lochs 50 aufweist. Das Loch 50 ist angepasst, um eine Vereinzelungseinrichtung 52, hier in Form eines Hubstempels 54, der in Z-Richtung beweglich gelagert ist, passieren zu lassen. Die Vereinzelungseinrichtung 52 umfasst hier ferner z.B. einen Schieber 55, der in X- und/oder Y-Richtung beweglich ist, um Waren 42, die mit Hilfe des Hubstempels 54 angehoben wurden, seitlich vom Winkelladungsträger 30 abzuschieben. Der Winkelladungsträger 30 kann mit oder ohne Fixierstege 38, 40 und mit oder ohne Schlitze 44-47, wie sie in Zusammenhang mit Fig. 4 offenbart wurden, ausgebildet werden.

Ferner gilt allgemein für die hier gezeigten Winkelladungsträger 30, dass die Stützwände 32 und 34 optional teleskopierbar ausgebildet sein können. Die Stützwände 32 und 34 können auch schwenkbar gelagert sein, um aus ihrer Lagerstellung zum Zwecke einer Entnahme 42 herausgeschwenkt zu werden. Eine Entnahme kann auch im Überkopfbetrieb des Winkelladungsträgers 30 erfolgen.

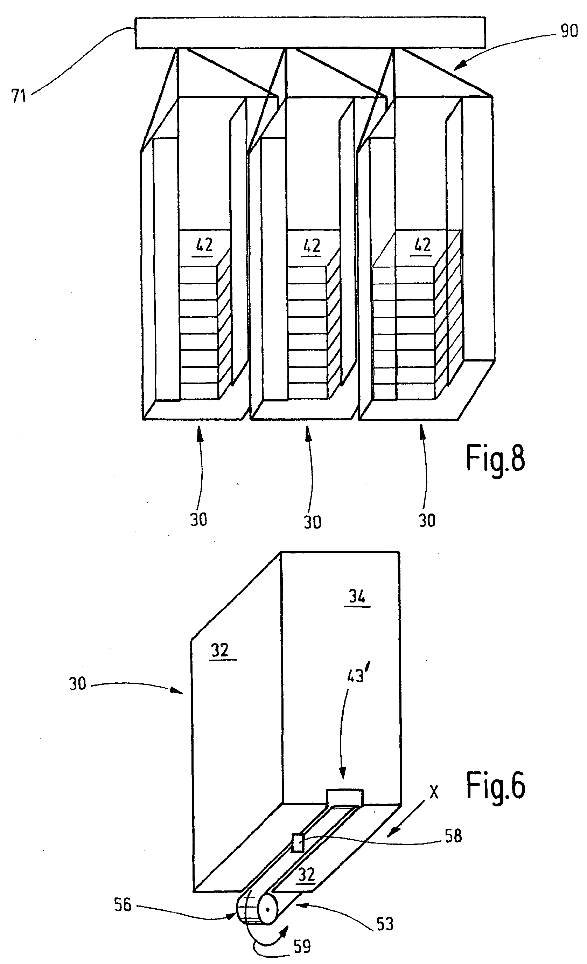

Bezug nehmend auf Fig. 6 ist eine weitere Ausführungsform eines Winkelladungsträgers 30 gezeigt.

Der Winkelladungsträger 30 der Fig. 6 weist die Ausnehmung 43' in seinem Boden 36 und einer der Stützwände 32 oder 34 (hier Stützwand 34) auf. Diese weiteren Aussparung 43 dient zur Wechselwirkung des Winkelladungsträgers 30 mit einer weiteren Vereinzelungseinrichtung 52, hier in Form eines isolierten Auswerfers 56, wie er z.B. bei A-Frames eingesetzt wird. Der Auswerfer 56 weist einen umlaufenden Mitnehmer 58 auf, der die Aussparung 43 durchgreift und der in Richtung des Pfeils 59 die Aussparung 43 in ihrer Längsrichtung (X-Richtung) wiederkehrend durchläuft. Auf diese Weise können Waren 42, die im Winkelladungsträger 30 in Form eines Stapels bevorratet sind, nach und nach ausgeschoben werden. Mittels der Schwerkraft rutschen die restlichen Waren 42 dann nach und stehen somit zur weiteren Ausgabe zur Verfügung.

Es versteht sich, dass der Betrieb mit einem Auswerfer 56 ein gewisses Maß an genauer Positionierung des Winkelladungsträgers 30 gegenüber dem Auswerfer 56 erfordert. Dies kann beispielsweise mit Hilfe eines hier nicht dargestellten Anschlags oder hier nicht dargestellten Arretierbacken geschehen, die den Winkelladungsträger 30 z.B. an den Stützwänden 32 und 34 blockieren, um die Aussparung 43 genau über dem umlaufenden Mitnehmer 58 zu halten.

Es versteht sich, dass auch der Winkelladungsträger 30 der Fig. 6 mit dem Fixierstegen 38 und 40 ausgerüstet werden kann. Ferner können mehrere Aussparungen 43 für mehrere parallele, horizontale Auswürfe vorgesehen werden.

Bezug nehmend auf Fig. 7 ist eine schematische Draufsicht auf eine erste konkrete Ausführungsform eines erfindungsgemäßen Lager- und Kommissioniersystems 10 gezeigt. Der in der Fig. 1 schematisch dargestellte Lagerbereich 12 geht hier nahtlos in den Kommissionierbereich 18 über, weil zwischen dem Wareneingang 24, der hier z.B. mit Hilfe eines Arbeiters 60 manuell bedient wird, und dem Warenausgang 26 ein endlos umlaufender Förderer 70 eingesetzt wird, der nachfolgend noch genauer beschrieben werden wird.

Am Wareneingang 24 werden eingehende Waren 24 z.B. von Europaletten manuell in leere Ladungsträger 30 umgeladen. Im Kommissionierbereich 18, wo auch die Kommissionierplätze 20 bzw. Kommissionierautomaten 22 vorgesehen sind, ist hier exemplarisch eine Auftragsbehälter-Fördertechnik 62 vorgesehen, mit deren Hilfe Auftragsbehälter 64 in Transportrichtung 66 zum Warenausgang 26 transportiert werden, sobald die den Auftragsbehältern 64 jeweils zugeordneten Kommissionieraufträge abgearbeitet sind.

Um die Waren 42 in den manuell befüllten Winkelladungsträgern 30 vom Wareneingang 24 zu den Kommissionierplätzen 20 bzw. Kommissionierautomaten 22 zu bringen, ist hier exemplarisch ein endlos umlaufender Horizontalförderer 70 in Form z.B. eines Hängeförderers 71 vorgesehen, wie er exemplarisch in der Fig. 8 gezeigt ist. Die Winkelladungsträger 30 sind dann mit einer entsprechenden Aufhängung 90 versehen, um in den Hängeförderer 71 eingehängt und aus ihm ausgehängt zu werden.

Zurückkehrend zu Fig. 7 werden die Winkelladungsträger 30 in Richtung der kleinen dunklen Pfeile (hier gegen den Uhrzeigersinn) transportiert. An den Förderer 70 schließen sich im Bereich des Wareneingangs 24 bzw. im Bereich der Kommissionierplätze bzw. der Kommissionierautomaten 22 sogenannte "Bahnhöfe" 72 bzw. 74 an. Sowohl der Bahnhof 72 im Bereich der Kommissionierplätze 20 bzw. der Kommissionierautomaten 22 als auch der Bahnhof 74 im Bereich des weiteren Eingangs 24 weist einen schleifenförmigen Förderer 76 (hier ebenfalls in Form eines Hängeförderers) auf, der jeweils über einen Einschleuspunkt 78 und einen Ausschleuspunkt 80 mit dem endlos umlaufenden Förderer 70 materialfördertechnisch verbunden ist. Gefüllte und leere Winkelladungsträger 30 können im Förderer 70 beliebig oft umlaufen, bevor sie in einen der Bahnhöfe 72 oder 74 gelenkt werden. Leere Winkelladungsträger 30 werden in den Bahnhof 74 zur Befüllung mit Waren 42 gelenkt. Volle Winkelladungsträger 30 werden zum Zwecke einer Kommissionierung von Waren 42 in den Bahnhof 72 gesteuert. Dort können die Waren 42 dann entweder manuell oder automatisiert entnommen werden, wie es u.a. im Zusammenhang mit den Fig. 2 bis 6 bereits exemplarisch erläutert wurde. Die Winkelladungsträger 30 können aber auch vollständig ausgehängt und in einen A-Frame eingefügt werden, was aber mit zusätzlichen Arbeitsschritten verbunden ist. Besser ist es, die Hängeförderer 30 der Fig. 6 im Bahnhof 72 zu belassen und den Auswerfer 56 so zu positionieren, dass er direkt unterhalb der Winkelladungsträger 30 sitzt. Dann ist ein direkter Auswurf von Waren 42 möglich.

Es versteht sich, dass mit der in der Fig. 7 dargestellten Raute lediglich die Option einer Vielzahl von verschiedenen Kommissionierlösungen angedeutet sein soll. Auch die gezeigte relative Position der Auftragsbehälter-Fördertechnik 62 zum Bahnhof 72 ist rein willkürlich gewählt. Wenn z.B., wie oben erläutert, ein Auswerfer 56 eingesetzt wird, empfiehlt es sich, die Auftragsbehälterfördertechnik 62 relativ nahe am Bahnhof 72 bzw. den Kommissionierplätzen 20 zu positionieren, so dass ausgeworfene Waren 42 direkt im Auftragsbehälter 64 landen.

Der Förderer 70 ist hier also gleichzeitig Lager und Teil der automatisierten Kommissionierung. Unterschiedlichste Technologien (Auswerfer, Roboter, Pick-by Light, etc.) können genutzt werden.

Das System der Fig. 7 ist skalierbar, wie es anhand der Fig. 10 gut erkennbar ist. Hängebahnen nehmen die Winkelladungsträger 30 auf, die hier nicht dargestellt sind und stellen eine Verbindung zwischen dem Wareneingang 24 und den Kommissionierplätzen 20 bzw. den Kommissionierautomaten 22 her. Je nach Gängigkeit oder anderen Produkteigenschaften (Größe, Gewicht, Form, etc.) werden spezielle Winkelladungsträger 30 bzw. Hängebahnen mit solchen Winkelladungsträgern 30 verwendet. Die Anzahl der Windungen eines Karussells kann variiert werden. Die Hängebahnen können als Einfach- oder Mehrfachschleifen ausgebildet sein. Dabei sind ausgekoppelte Strecken zur Anbindung von Kommissionierplätzen und dem Wareneingang vorgesehen.

Die Auftragsbehälter 64 der Fördertechnik 62 können ebenfalls in Form von Bahnhöfen an die jeweiligen Kommissionierplätze 20 bzw. Kommissionierautomaten 22 angebunden sein. Es versteht sich, dass nicht zwingend Behälter 64 zum Aufnehmen der Aufträge vorgesehen werden müssen. Grundsätzlich kann jeder beliebige Ladungsträgertyp eingesetzt werden (wie z.B. Kartons, Paletten, etc.).

Das erfindungsgemäße System lässt sich vielfältig einsetzen. Es kann z.B. eingesetzt werden für: ein Kommissionieren mit Robotern, zum Kommissionieren mit A-Frames, im Zusammenhang mit biegeschlaffer Ware (wie z.B. eingeschweißten Poloshirts), und bei vielen anderen ähnlichen Anwendungen.

Mit dem vorliegenden Ansatz werden die Vorgänge Lagern und Kommissionieren verschmolzen. Durch die Variationen von Winkelladungsträgerdimensionen und Winkelarten bzw. der dazu eingesetzten Kommissioniertechnik können nahezu alle logistischen Anforderungen abgedeckt werden, und zwar vom Schnelldreher bis zum Handling von Retourwaren. Die Winkelladungsträger 30 können stapelbar sein. Die Winkelladungsträger 30 können selbst wiederum Teil von Winkelladungsträger-Auswurfeinrichtungen (nicht gezeigt) sein. Die Winkelladungsträger 30 können wie Behälter, in ein Fachbodenregalen, oder speziell ausgestalteten Regalen eingehängt werden.

## Patentansprüche

1. Lager- und Kommissioniersystem (10) mit einem Lagerbereich (12) und einem Kommissionierbereich (18), wobei sowohl zur Lagerung als auch zum Transport von zu kommissionierenden Waren (42) zwischen dem Lagerbereich (12) und dem Kommissionierbereich (18) Winkelladungsträger (30) eingesetzt sind, wobei ein Winkelladungsträger (30) Fixierstege (38, 40) und drei Seiten (32, 34, 36) aufweist, wobei die Seiten (32, 34, 36) im Wesentlichen rechtwinklig zueinander orientiert sind und eine erste Stützwand (32), eine zweite Stützwand (34) und einen Boden (36) zum stapelartigen Bevorraten der Waren (42) definieren, wobei die Stützwände (32, 34) jeweils eine Vielzahl von Aussparungen (43) aufweisen, wobei die Vielzahl von Aussparungen (43) in einem derartigen Rastermaß angeordnet sind, dass die Fixierstege (38, 40) eng an die Waren (42) gesetzt werden können, und wobei jede der Aussparungen (43) zur Lösbaren Aufnahme eines der Fixierstege (38, 40) angepasst ist, wobei die Stutzwände (32, 34) säulenartig aus dem Boden (36) herausragen und die Fixierstege (38, 40) parallel zu den Stützwänden (32, 34) angebracht sind, so dass auf dem Winkelladungsträger sortenrein gespeicherte Waren (42) eine wiederkehrende, fest definierte Position relativ zum Boden (36) einnehmen.

2. System nach Anspruch 1, wobei die Aussparungen (43) Schlitze (44-47) sind, in die die Fixierstege (38, 40) einhängbar sind.

3. System nach Anspruch 1 oder 2, wobei die Aussparungen (43) auch im Boden vorgesehen sind.

4. System nach Anspruch 1, wobei der Boden (36) und eine der Stützwände (32, 34) eine Ausnehmung (43') aufweisen, die derart ausgebildet ist, dass ein umlaufender Mitnehmer (58) eines Auswerfers (56) einer Vereinzelungsvorrichtung (52) die Ausnehmung (43') wiederkehrend durchlaufen kann, um im Winkelladungsträger stapelförmig bevorratete Waren (42) schrittweise auszuschieben, so dass nicht ausgeschobene Waren (42) schrittweise mittels Schwerkraft nachrutschen und so zur weiteren Ausgabe zur Verfügung stehen.

5. System nach Anspruch 1 mit einer Vereinzelungseinrichtung (52), wobei der Boden (36) ein Loch (50) aufweist, das angepasst ist, die Vereinzelungseinrichtung (52), vorzugsweise einen Hubstempel (54), passieren zu lassen, um bevorratete Waren (42) im Winkelladungsträger (30) anzuheben.

6. System nach Anspruch 5, wobei die Vereinzelungseinrichtung (52) einen Hubstempel (54) und einen Schieber (55) aufweist, wobei der Schieber (55) so angeordnet ist, dass angehobene Waren (42) bei einem oberen Rand des Winkelladungsträgers seitlich abgeschoben werden können.

7. System nach Anspruch 1, wobei die Winkelladungsträger (30) zum Einhängen in einen Hängeförderer (71), zum Transportieren auf einem Horizontalförderer, zum Lagern in einem Fachbodenregal und/oder zum Stapeln mit anderen Winkelladungsträgern (30) angepasst sind.

8. System nach einem der Ansprüche 1 oder 7, wobei der Lagerbereich (12) und der Kommissionierbereich (18) über mindestens einen Förderer (28, 70), insbesondere einen Hängeförderer (71), eine Rollenbahn und/oder einen Gurtförderer, materialflusstechnisch miteinander verbunden sind.

9. System nach einem der Ansprüche 1, 7 oder 8, wobei der Lagerbereich (12) Regale, insbesondere Fachbodenregale oder Hängeregale, die zur Speicherung der Winkelladungsträgern (30) angepasst sind, oder mindestens einen umlaufenden Förderer (16), insbesondere einen Hängeförderer (71), aufweist.

## Claims

1. A storage and order-picking system (10) having a storage area (12) and a picking area (18), wherein angular load supports (30) are used for both the storage and the transportation of to-be-picked goods (42) between the storage area (12) and the picking area (18), wherein an angular load support (30) comprises fixing bars (38, 40) and three sides (32, 34, 36), which are substantially orientated perpendicular to each other and define a first support wall (32), a second support wall (34) and a base (36) for storing the goods (42) in stacks, wherein the support walls (32, 34) respectively comprise a plurality of recesses (43), wherein the plurality or recesses (43) is arranged in accordance with a grid pitch so that the fixing bars (38, 40) can be placed closely to the goods (42), and wherein each of the recesses (43) is adapted to removably receive one of the fixing bars (38, 40), wherein the sidewalls (32, 34) protrude column-like from the base (36), and the fixing bars (38, 40) are mountable in parallel relative to the sidewalls (32, 34) so that goods (42), which are stored by one sort only on the angular load support take a repeating and fixedly defined position relative to the base (36).

2. The system of claim 1, wherein the recesses (43) are slots (44-47) into which the fixing bars (38, 40) can be hung.

3. The system of claim 1 or 2, wherein the recesses (43) are also provided in the base.

4. The system of claim 1, wherein the base (36) and one of the support walls (32, 34) comprise one opening (43') which is formed such that a circulating follower (58) of a dispenser device (56) of a separation device (52) passes the opening (43') repeatedly, in order to dispense the goods (42) which are stored in a stackwise manner in the angular load support so that the goods (42), which are not dispensed, follow step-by-step due to gravity, thereby being provided for the next delivery.

5. The system of claim 1 having a separation device (52), wherein the base (36) comprises one hole (50) which is adapted to allow the separation device (52), preferably a lifting punch (54) to pass, in order to lift the goods (42) being stored in the angular load support (30).

6. The system of claim 1, wherein the separation device (52) comprises a lifting punch (54) and a pusher (55), wherein the pusher (55) is arranged such that lifted goods (42) can be pushed off laterally at an upper rim of the angular load support.

7. The system of claim 1, wherein the angular load supports (30) are adapted for being hung to an overhead conveyor (71); for being transported on a horizontal conveyor; for being stored in a shelf; and/or for being stacked with other angular load supports (30).

8. The system of one of claims 1 or 7, wherein the storage area (12) and the picking area (18) are connected to each other via at least one conveyor (28, 70), in particular an overhead conveyor (71), a roller track and/or a belt conveyor, in terms of material flow.

9. The system of any of the claims 1, 7 or 8, wherein the storage area (12) comprises racks, in particular shelves or hanging racks which are adapted for storing the angular load supports (30), or at least one circulating conveyor (16), in particular an overhead conveyor (71).

## Revendications

1. Système d'entreposage et de préparation des commandes (10) comprenant une zone d'entreposage (12) et une zone de préparation des commandes (18), des supports de charge angulaires (30) étant utilisés à la fois pour l'entreposage et pour le transport de marchandises à préparer (42) entre la zone d'entreposage (12) et la zone de préparation des commandes (18), un support de charge angulaire (30) présentant des nervures de fixation (38, 40) et trois côtés (32, 34, 36), les côtés (32, 34, 36) étant orientés sensiblement à angle droit les uns par rapport aux autres, et définissant une première paroi de support (32), une deuxième paroi de support (34) et un fond (36) pour le stockage des marchandises (42) sous forme empilée, les parois de support (32, 34) présentant chacune une pluralité d'évidements (43), la pluralité d'évidements (43) étant disposée suivant une trame modulaire telle que les nervures de fixation (38, 40) puissent être placées étroitement contre les marchandises (42), et chacun des évidements (43) étant adapté à recevoir de manière amovible l'une des nervures de fixation (38, 40), les parois de support (32, 34) se dressant à la manière de colonnes depuis le fond (36) et les nervures de fixation (38, 40) étant montées parallèlement aux parois de support (32, 34), de telle sorte que des marchandises (42) stockées par types sur le support de charge angulaire adoptent une position récurrente définie fixement par rapport au fond (36).

2. Système selon la revendication 1, dans lequel les évidements (43) sont des fentes (44-47) dans lesquelles peuvent être accrochées les nervures de fixation (38, 40).

3. Système selon la revendication 1 ou 2, dans lequel les évidements (43) sont également prévus dans le fond.

4. Système selon la revendication 1, dans lequel le fond (36) et l'une des parois de support (32, 34) présentent un orifice (43') réalisé de telle sorte qu'un dispositif d'entraînement en boucle sans fin (58) d'un éjecteur (56) d'un dispositif de séparation (52) puisse passer de manière récurrente à travers l'orifice (43'), afin de faire sortir pas à pas des marchandises (42) stockées de manière empilée dans le support de charge angulaire de telle sorte que les marchandises non sorties (42) retournent par glissement pas à pas au moyen de la force de pesanteur et soient donc disponibles pour une distribution ultérieure.

5. Système selon la revendication 1, comprenant un dispositif de séparation (52), le fond (36) présentant un trou (50), lequel est adapté à permettre le passage du dispositif de séparation (52), de préférence un piston de levage (54), afin de soulever des marchandises stockées (42) dans le support de charge angulaire (30).

6. Système selon la revendication 5, dans lequel le dispositif de séparation (52) présente un piston de levage (54) et un tiroir (55), le tiroir (55) étant disposé de telle sorte que des marchandises soulevées (42) puissent être expulsées latéralement au niveau d'un bord supérieur du support de charge angulaire.

7. Système selon la revendication 1, dans lequel les supports de charge angulaires (30) sont prévus pour être accrochés dans un convoyeur aérien (71), pour le transport sur un convoyeur horizontal, pour l'entreposage dans un rayonnage à tablettes et/ou pour l'empilement avec d'autres supports de charge angulaires (30).

8. Système selon l'une quelconque des revendications 1 ou 7, dans lequel la zone d'entreposage (12) et la zone de préparation des commandes (18) sont reliées l'une à l'autre par une technique de flux des matériaux par le biais d'au moins un convoyeur (28, 70), en particulier un convoyeur aérien (71), une bande à rouleaux et/ou un transporteur à bande.

9. Système selon l'une quelconque des revendications 1, 7 ou 8, dans lequel la zone d'entreposage (12) présente des étagères, en particulier des étagères à tablettes ou des étagères suspendues, qui sont adaptées au stockage des supports de charge angulaires (30), ou présente au moins un transporteur en boucle sans fin (16), en particulier un convoyeur aérien (71).
